# FASCICULE DE BREVET EUROPEEN

(11) **EP 1 058 403 B1**
(45) Date de publication et mention de la délivrance du brevet: **05.03.2003**
(21) Numéro de dépôt: 00401359.5
(22) Date de dépôt: 18.05.2000
(51) Int. Cl.: H04B 3/36

(54) **Procédé de gestion d'un reseau d'équipements**
Vefahren zur Verwaltung einer Netzwerkeinrichtung
Method for managing network equipment

(30) Priorité: 04.06.1999 FR 9907110
(43) Date de publication de la demande: 06.12.2000
(73) Titulaire: STMicroelectronics S.A., 92120 Montrouge (FR)
(72) Inventeur: Le van Suu, Maurice, 75116 Paris (FR)
(74) Mandataire: Ballot, Paul

(56) Documents cités:
- WO-A-97/24858
- US-A- 4 317 010
- US-A- 5 408 348

## Description

La présente invention concerne un procédé de gestion d'un réseau d'équipements. Par réseau d'équipements, on entend dans la suite un groupe d'équipements quelconques, reliés entre eux par tout moyen de liaison approprié, de manière à échanger des messages d'information, des messages de gestion et/ou de l'énergie.

De tels équipements peuvent être des appareils domestiques dans le cas d'un réseau domotique, des ordinateurs dans le cas d'un réseau informatique, des équipements urbains (lampadaires ou autres) reliés à un centre de commande, des boîtiers de relevé météorologique, des répétiteurs de téléphonie, de télévision, etc ... Les moyens de liaison peuvent comprendre un réseau informatique par courant porteur, de type LAN (de l'anglais "Local Area Network", qui signifie réseau local) ou autre, un réseau de câbles coaxiaux, de fibres optiques, ou autres, ou même l'air ou tout autre milieu physique dans le cas d'une transmission par ondes électromagnétiques (radiofréquences, optiques, ou autres)

Dans l'état de la technique, on distingue deux types de réseaux en fonction de l'organisation spatiale des équipements:
- d'une part les réseaux dits "banalisés" pour lesquels on connaît, lors de la réalisation et de la mise en place des équipements, la distance qui sépare deux équipements entre eux dans le réseau. Il s'agit par exemple d'un réseau de répétiteurs de ligne pour la transmission de signaux téléphoniques sur longue distance, dans lequel les répétiteurs sont distants les uns des autres d'une distance constante ou à peu près constante ;
- d'autre part les réseaux dits "non banalisés", pour lesquels la distance qui sépare deux équipements entre eux n'est pas définie à l'avance. Il s'agit par exemple d'un réseau d'équipements domestiques connectés en anneau dans une habitation, en sorte que le trajet des messages échangés, et donc a fortiori la distance parcourue par ces messages entre deux équipements, ne sont pas déterminés lors de la fabrication des équipements et/ou lors de l'installation du réseau.

L'invention s'applique plus particulièrement à *des* réseaux non banalisés mais elle peut aussi s'appliquer à des réseaux banalisés.

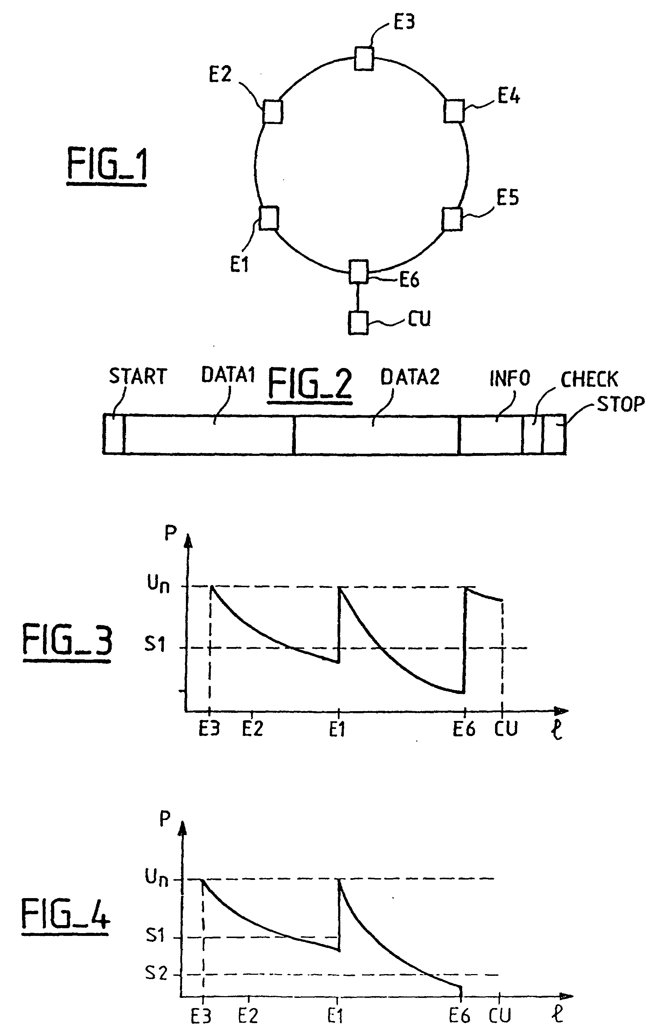

A la figure 1, on a représenté le schéma d'un réseau d'équipements E1 à E6 connectés en anneau et reliés entre eux et à un équipement particulier formant unité de gestion CU, par des moyens de liaison LT. S'agissant d'un réseau non banalisé, la distance entre deux des équipements E1-E6 et CU est inconnue.

Les messages envoyés par un équipement déterminé (ci-après l'équipement destinateur) à destination d'une autre équipement (ci-après l'équipement destinataire), sont émis sous forme d'un signal, par exemple un signal électrique modulé. Dans les réseaux non banalisés en particulier, les messages sont émis avec une puissance nominale, notée Uₙ, qui est indépendante de la distance qui sépare l'équipement destinateur de l'équipement destinataire. La valeur de Uₙ est en outre limitée par des considérations d'économie de consommation électrique, voire par les capacités de l'alimentation de l'équipement destinateur, ainsi que par des considérations liées à la compatibilité électromagnétique (on ne peut légalement émettre un signal, quel qu'il soit, avec une puissance très grande sans respecter des normes destinées à protéger les autres appareils électriques ou électroniques en fonctionnement dans la même zone géographique).

Dans un réseau tel que celui représenté à la figure 1, un message émis par exemple par l'équipement E3 à destination de l'équipement CU transite, disons, par les équipement E2, E4 et E6. Néanmoins, en raison de l'atténuation sur les moyens de liaison, le niveau de puissance du signal diminue à mesure que le signal progresse dans le réseau. Ainsi par exemple, il peut être égal à 0,90xUₙ au niveau de l'équipement E2, à 0,60xUₙ au niveau de l'équipement E1, de 0,40xUₙ au niveau de l'équipement E6 et enfin de 0,25xUₙ une fois parvenu à l'équipement CU.

Or, en raison de plus des phénomènes de brouillage auxquels sont soumis les signaux sur les moyens de liaison LT, le niveau de puissance du signal reçu par l'équipement destinataire peut ne pas être suffisant pour un décodage sans erreur de ce message. Dit autrement, le message peut avoir été brouillé avant d'avoir été reçu par l'équipement destinataire, compte tenu des perturbations électromagnétiques ou autre sur les moyens de liaison.

On constate qu'un problème similaire se pose dans les réseaux banalisés lorsque l'atténuation des signaux sur les moyens de liaison varie de façon non contrôlée.

C'est pourquoi on a déjà proposé d'amplifier le signal portant le message transmis, entre l'équipement destinateur et l'équipement destinataire, une ou plusieurs fois selon les besoins. C'est le principe des répétiteurs de signaux. Cette technique permet d'améliorer le rapport, noté S/N dans la littérature technique, du niveau de puissance du signal sur le niveau de puissance du bruit. Dans les réseaux non banalisés notamment, l'amplification est sélective en ce sens qu'elle n'est effectuée que lorsqu'elle est nécessaire, c'est à dire lorsque le niveau de puissance du signal reçu par un équipement intermédiaire donné en vue d'être transmis à l'équipement destinataire (le cas échéant via un autre équipement intermédiaire) est inférieur à un seuil.

Cependant, un inconvénient réside dans le fait que le niveau du signal reçu par l'équipement destinataire peut finalement être relativement élevé, alors qu'il aura été très faible voire proche de celui du bruit à un stade antérieur de la transmission. Le message reçu est donc malgré tout susceptible d'avoir été corrompu en cours de la transmission. Ceci signifie que le fait que le signal ait été amplifié et ait donc pu être reçu par l'unité de gestion avec un niveau de puissance peu éloigné de Uₙ, masque le risque de corruption du message reçu.

L'invention vise à pallier cet inconvénient de l'état antérieur de la technique.

A cet effet, l'invention propose un procédé de gestion d'un réseau d'équipements reliés par des moyens de liaison et dont certains au moins peuvent être destinateurs et/ou destinataires de messages, selon lequel un message émis par un équipement à destination d'un autre équipement sous la forme d'un signal ayant une puissance nominale déterminée à l'émission, est modifié pour indiquer, le cas échéant, que ledit signal a été amplifié par un équipement intermédiaire, compris entre l'équipement destinateur et l'équipement destinataire, et par lequel ce signal transite.

Plus particulièrement, le procédé comporte les étapes suivantes :
- émission d'un message par l'équipement destinateur vers l'équipement destinataire, sous la forme d'un signal ayant une puissance nominale déterminée ;
- réception du signal par au moins un équipement intermédiaire du réseau, compris entre l'équipement destinateur et l'équipement destinataire ;
- mesure d'une donnée représentative de la qualité du signal reçu et comparaison de cette donnée à au moins un premier seuil ;
- lorsque la donnée mesurée est inférieure audit premier seuil, modification du message pour indiquer qu'une amplification est effectuée et amplification du signal ;
- émission du signal par l'équipement intermédiaire du réseau vers l'équipement destinataire.

Par qualité du signal, on entend une grandeur du signal qui est positivement liée à l'intégrité des données du message vis à vis du bruit.

Ainsi, lorsqu'il est reçu par l'équipement destinataire, le message comporte une indication selon laquelle une amplification du signal a eu lieu depuis son émission par l'équipement destinateur. Cette indication est aussi, indirectement, une indication selon laquelle le message risque d'être corrompu, c'est à dire être entaché d'erreurs. L'équipement destinataire est alors à même de gérer cette indication de toute manière appropriée. Dans un cas classique, l'équipement destinataire peut demander à l'équipement destinateur d'émettre à nouveau le message à un moment ultérieur. Ou alors il n'émet pas un message habituel pour l'acquittement du message reçu, en sorte que l'équipement destinateur, de lui-même, émettra à nouveau le message à un moment ultérieur, ce qui revient au même. Or, les conditions de transmission sur les moyens de liaison sont susceptibles de s'être améliorées dans l'intervalle de temps écoulé entre ces deux émissions (notamment l'atténuation sur les moyens de liaison peut avoir diminué), en sorte qu'il est possible que le signal ainsi émis ne doive pas être amplifié, ou moins souvent. Le risque de corruption du message sera alors être moins grand.

L'invention concerne en outre un équipement pour la mise en oeuvre d'un procédé tel que défini ci-dessus, qui comporte :
- des moyens pour recevoir un signal émis par un équipement destinateur ayant une puissance nominale déterminée à l'émission ;
- des moyens pour mesurer une donnée représentative de la qualité du signal reçu ;
- des moyens pour comparer cette information à un premier seuil ;
- des moyens pour modifier un message porté par le signal de manière à indiquer qu'une amplification du signal est effectuée et des moyens pour amplifier le signal, lorsque la donnée mesurée est inférieure à ce premier seuil ;
- et des moyens pour émettre vers un équipement destinataire le message ainsi modifié sous forme d'un signal amplifié, en sorte que sa puissance est égale à la puissance nominale.

L'invention concerne encore un message émis sous forme d'un signal par un équipement d'un réseau à destination d'un autre équipement du réseau, caractérisé en ce qu'il comporte un mot dont la valeur indique le nombre de fois où le signal a été amplifié par un équipement intermédiaire du réseau compris entre l'équipement destinateur et l'équipement destinataire.

D'autres caractéristiques et avantages de l'invention apparaîtront encore à la lecture de la description qui va suivre. Celle-ci est purement illustrative et doit être lue en regard des dessins annexés sur lesquels on a représenté :
- à la figure 1, déjà analysée : le schéma d'un réseau d'équipements en anneau ;
- à la figure 2 : le format d'un message émis selon l'invention ;
- à la figure 3 : un graphique illustrant un premier mode de mise en oeuvre de l'invention ;
- à la figure 4 : un graphique illustrant un second mode de mise en oeuvre de l'invention ;
- à la figure 5 : le schéma d'un circuit compris dans un équipement selon l'invention ;
- aux figures 6a et 6b : des chronogrammes de signaux du circuit de la figure 5 dans un premier cas ;
- aux figures 7a et 7b : des chronogrammes de signaux du circuit de la figure 5 dans un second cas.

Dans la description qui suit, on considère l'exemple non limitatif d'un réseau de lampadaires urbains connectés entre eux et à un centre de commande situé sensiblement au milieu d'une ville. En reprenant le schéma de la figure 1, les équipements E1 à E6 sont donc des lampadaires et l'équipement CU formant unité de gestion est un centre de commande des lampadaires. Les lampadaires E1-E6 et le centre de commande CU sont reliés entre eux par des moyens de liaison LT tels que des câbles coaxiaux ou autres. Ces moyens permettent l'échange de messages entre les lampadaires et le centre de commande. Dans un exemple conforme à la figure 1, le réseau est un réseau en anneau. Bien entendu un réseau en étoile ou tout autre type de réseau est aussi possible.

Le centre de commande émet des messages à destination des lampadaires pour commander leur éclairement lorsque la nuit tombe et leur non éclairement lorsque le jour se lève. Un ou plusieurs capteurs de lumière ambiante (non représentés) sont disposés à cet effet, par exemple sur la façade du centre de commande.

On peut aussi prévoir que les lampadaires émettent des messages à destination de l'unité de gestion à des moments bien déterminés, par exemple pour lui transmettre des informations de maintenance préventive. Ainsi, si un lampadaire comporte une lampe défectueuse, il émet un message pour signaler cette défectuosité.

Ces deux types de messages, notamment ceux émis par les lampadaires, ont une puissance nominale Uₙ à l'émission.

A la figure 2, on a représenté le format possible d'un message transmis par un équipement destinateur vers un équipement destinataire.

Le message comporte tout d'abord un bit de démarrage START qui a pour fonction de synchroniser une horloge de l'équipement destinataire avec le message reçu. Il comporte ensuite deux mots de données utiles DATA1 et DATA2, chacun sur huit bits (c'est à dire un octet). Dans un exemple, le mot DATA1 contient un identifiant de l'équipement destinataire et/ou de l'équipement destinateur, alors que le mot DATA2 contient les données transmises proprement dites.

A la suite des mots DATA1 et DATA2, le message comporte un mot INFO, par exemple sur trois bits, dont la fonction est d'indiquer, en fonction de sa valeur, si et le cas échéant combien de fois le signal portant le message a été amplifié entre son émission par l'équipement destinateur et sa réception par l'équipement destinataire.

Ensuite, le message comporte un bit de contrôle CHECK, qui peut notamment être un bit de contrôle de parité, ainsi qu'un bit STOP de fin de transmission, qui indique la fin du message. Des bits de service tels que les bits START, CHECK et STOP encadrant les mots de données utiles DATA1 et DATA2 sont classiques dans les transmissions numériques. Par contre le mot INFO, tel que défini ci-dessus dans sa fonction technique, est caractéristique d'un message selon l'invention.

Avec un mot INFO codé sur trois bits, il est possible d'indiquer au maximum huit amplifications du signal portant le message. Néanmoins, dans certaines applications, un nombre de bits inférieur peut se révéler suffisant ou, au contraire, un nombre de bits supérieur peut se révéler nécessaire.

A la figure 3, on a représenté un graphique permettant d'illustrer un premier mode de mise en oeuvre du procédé selon l'invention.

Sur ce graphique, l'axe de abscisses représente la distance 1 entre les équipements E1-E6 et CU, suivant un trajet sur les moyens de liaison LT (figure 1) qui relie ces équipements. L'axe des ordonnées représente le niveau de puissance P d'un signal transmis sur ces moyens de liaison LT.

On suppose qu'un message est émis par l'équipement E3 à un instant donné à destination du centre de commande CU, sous la forme d'un signal transitant successivement par les équipements E2, E1 et E6 avant de parvenir à l'équipement destinataire CU. Lorsqu'il est émis par l'équipement destinateur, à savoir E3, le message comporte un mot INFO ayant une valeur binaire nulle 000. Dit autrement, le mot INFO du message est initialement à la valeur nulle. Ce message binaire module un signal haute fréquence (une porteuse) qui est, à l'émission, a une puissance nominale Uₙ. Notamment, il s'agit préférentiellement d'une modulation de fréquence.

Chaque équipement par lequel le signal transite comporte des moyens pour recevoir le signal émis par l'équipement destinateur (et ayant une puissance nominale Uₙ à l'émission), des moyens pour mesurer une donnée représentative de la qualité du signal reçu, des moyens pour comparer cette donnée à un seuil S1, des moyens pour modifier le message afin d'indiquer qu'une amplification du signal est réalisée et des moyens pour amplifier le signal lorsque la donnée mesurée est inférieure à ce seuil, et des moyens pour émettre vers l'équipement destinataire le message ainsi modifié sous forme d'un signal amplifié, en sorte que sa puissance est de nouveau à égale à Uₙ.

Dans un exemple préféré, la donnée mesurée est tout simplement le niveau de puissance du signal reçu, c'est à dire la puissance de la porteuse. En effet, il n'est pas contestable que plus la puissance du signal reçu par un équipement est élevée, et moins ce signal risque d'avoir été corrompu lors de la transmission à cet équipement. Une telle donnée est donc bien représentative de la qualité du signal, au sens indiqué plus haut.

Néanmoins, en variante, il est possible de mesurer le rapport S/N du niveau de puissance du signal sur le niveau de puissance du bruit, ou encore un taux d'erreur pour les données transmises (cette dernière variante nécessitant l'émission de données de référence connues des équipements). Dans chaque variante, les équipements comprennent des moyens de mesure appropriés, compte tenu de la nature de l'information à mesurer. De tels moyens sont connus en eux-mêmes et n'ont pas besoin d'être décrits ici.

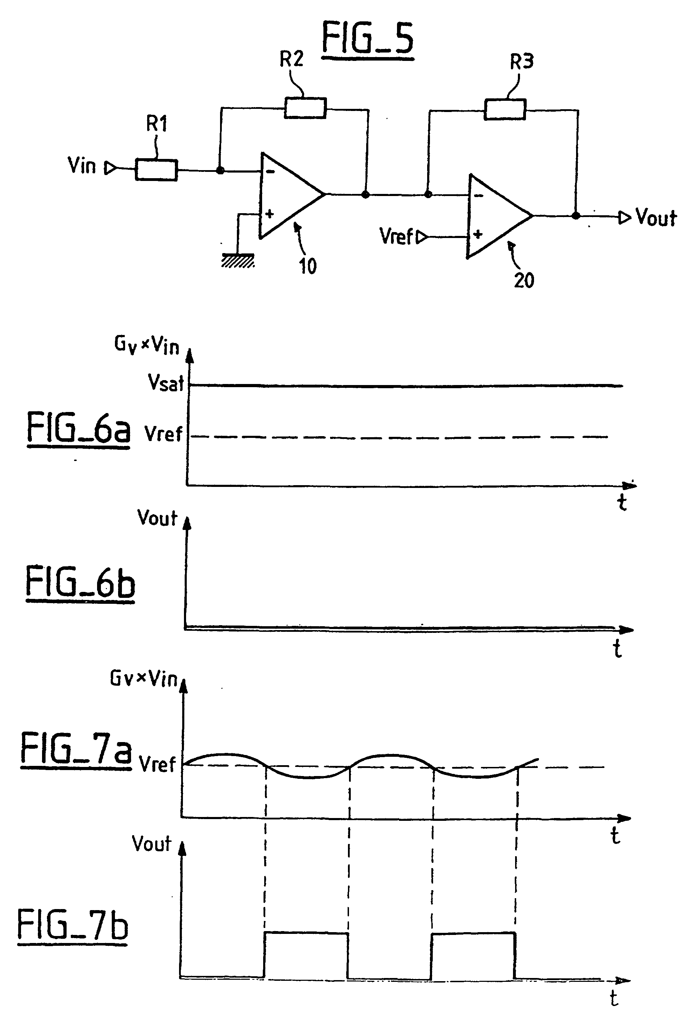

Dans un premier mode de réalisation des équipements, les moyens pour mesurer le niveau de puissance du signal reçu et les moyens pour le comparer au seuil S1 comprennent un circuit composé d'un amplificateur dont la sortie peut saturer en fonction du niveau du signal reçu (c'est à dire se maintenir à une valeur maximum au lieu d'amplifier linéairement le signal fourni en entrée), suivi d'un comparateur. Un tel circuit est représenté sur le schéma de la figure 5.

L'amplificateur comprend un amplificateur opérationnel 10 monté en amplificateur inverseur avec deux résistances R1 et R2, l'entrée non inverseuse de l'amplificateur opérationnel étant reliée à la masse. Le gain en tension Gv d'un tel amplificateur vaut -R2/R1. La sortie de cet amplificateur sature à une valeur déterminée Vsat lorsque la sortie atteint la valeur de la tension positive d'alimentation de l'amplificateur opérationnel 10.

Le comparateur comprend un amplificateur opérationnel 20 dont la sortie peut être couplée à son entrée inverseuse par l'intermédiaire d'une résistance R3 permettant d'introduire une hystérésis, et dont l'entrée non inverseuse reçoit une tension de référence Vref. L'entrée inverseuse de l'amplificateur opérationnel 20 est reliée à la sortie de l'amplificateur opérationnel 10, et sa sortie délivre un signal Vout pouvant avoir une valeur positive ou une valeur nulle en fonction du signe de la tension GvₓVin-Vref. La valeur du signal Vref est inférieure à celle de la tension de saturation Vsat de l'amplificateur.

L'amplificateur opérationnel 10 reçoit en entrée le signal reçu par l'équipement, c'est à dire la porteuse modulée, noté Vin sur la figure 5. Le cas échéant, le signal reçu est préalablement filtré selon un filtrage passe-bande et amplifié avec un gain déterminé (et connu), avant d'être porté en entrée de l'amplificateur opérationnel.

A la figure 6a, on a représenté un chronogramme du signal GvₓVin en sortie de l'amplificateur lorsque celui-ci est saturé. C'est le cas lorsque le signal reçu a un niveau de puissance supérieur au seuil S1. Dans ce cas, le signal Vout en sortie du comparateur est constant et de valeur nulle, comme représenté sur le chronogramme de la figure 6b.

A la figure 7a, on a représenté un chronogramme du signal GvₓVin en sortie de l'amplificateur lorsque celui-ci n'est pas saturé. C'est le cas lorsque le signal reçu a un niveau de puissance inférieur au seuil S1. Dans ce cas, le signal Vout en sortie du comparateur oscille entre la valeur nulle et la valeur positive de sortie du comparateur, comme représenté sur le chronogramme de la figure 7b.

Bien entendu, le gain Gv de l'amplificateur est calculé de manière à rendre bien distincts les deux cas ci-dessus, compte tenu de la valeur choisie du seuil S1.

Le rapport entre le temps où le signal Vout est à la valeur nulle et le temps où il est à la valeur positive de sortie du comparateur varie en fonction de l'écart entre la tension Vref et la composante continue de la tension Vin. Dit autrement, plus la composante continue de la tension Vin est élevée et plus la largeur des échelons du signal Vout est faible, à période constante. Dit autrement encore, la rapport cyclique du signal Vout est d'autant plus faible que la composante continue de la tension Vin est élevée.

On voit donc non seulement que le signal Vout peut être exploité en ce sens que s'il présente des échelons de tension alors c'est que le niveau de puissance du signal reçu par l'équipement est inférieur au seuil S1 et que par conséquent ce signal doit être amplifié, mais on voit aussi que le rapport cyclique du signal Vout donne une indication quantitative du niveau de puissance du signal reçu dans la mesure où il est inférieur à S1. Cette indication peut avantageusement être exploitée dans l'équipement, et ce de toute manière appropriée.

Dans un second mode de réalisation des équipements, les moyens pour mesurer le niveau de puissance du signal reçu comprennent des moyens numériques de mesure de la durée des impulsions délivrées en sortie d'un circuit de récupération de rythme. Un tel circuit accepte en entrée le signal reçu par l'équipement après démodulation et génère des impulsions rectangulaires en phase avec les ondulations de ce signal. Il s'agit donc essentiellement d'un circuit comparateur.

Les fronts montants de ces impulsions rectangulaires sont utilisés pour récupérer le rythme du signal reçu. Les moyens numériques de mesure de la durée de ces impulsions comprennent un compteur qui démarre sur les fronts montants de ces impulsions et qui s'arrête sur leurs fronts descendants. Plus la valeur finale du compteur est élevée, et plus le niveau de puissance du signal reçu est élevé. Autrement dit, on compare cette valeur à une valeur de référence déterminée, compte tenu de la valeur choisie du seuil S1. Si la valeur finale du compteur est inférieure à cette valeur de référence, c'est que la niveau de puissance du signal reçu est inférieur au seuil S1 et que par conséquent ce signal doit être amplifié.

A la figure 3, on constate que la puissance P du signal transmis sur les moyens de liaison décroît de manière exponentielle en fonction de 1, en partant de la valeur Uₙ de la puissance nominale . Toutefois, au niveau de l'équipement E2, la puissance mesurée du signal reçu est encore supérieure au seuil S1, en sorte que le signal n'est pas amplifié dans l'équipement E2. Dit autrement, il est émis sans être amplifié. Sa puissance n'augmente donc pas au niveau de l'équipement E2. De plus le message qu'il porte n'est pas modifié.

Par contre, au niveau de l'équipement E1, la puissance P est inférieure au seuil S1. Donc le signal reçu par cet équipement y est amplifié, avant d'être émis à destination de l'équipement destinataire CU (via encore l'équipement E6). La valeur de la puissance P du signal repasse alors à la valeur Uₙ de la puissance nominale au niveau de l'équipement E1. Avant d'être émis sous la forme d'un signal amplifié, le message est modifié au niveau de l'équipement E1, de manière à indiquer qu'une amplification a eu lieu. Ceci peut se réaliser en incrémentant d'une unité la valeur du mot INFO, qui passe alors à 001 en notation binaire.

Le même phénomène se répète au niveau de l'équipement E6, en sorte que le message y est à nouveau modifié pour indiquer qu'une nouvelle amplification a lieu dans cet équipement. Pour ce faire, la valeur du mot INFO est par exemple incrémentée à nouveau d'une unité, en sorte qu'elle passe à 010 en notation binaire. Le signal est émis après amplification, c'est à dire avec une puissance à nouveau égale à la puissance nominale Uₙ. Il est ensuite reçu par l'équipement destinataire CU.

Lorsque le signal est reçu par l'équipement destinataire CU, celui-ci extrait le message par démodulation du signal reçu, et traite la valeur du mot INFO comme une indication du fait que le message peut être corrompu. Plus la valeur de INFO est élevée, et plus le message risque d'être corrompu. Au delà d'une certaine valeur, on peut prévoir que l'équipement destinataire ne tienne pas compte des données du message reçu. Toutefois, grâce au fait que l'équipement destinataire CU a cependant reçu un message (fut-il très corrompu), il sait que l'équipement E3 a tenté de lui envoyer un message et il peut ultérieurement demander à cet équipement E3 de l'émettre à nouveau à un moment où l'atténuation sur les moyens de liaison sera peut-être plus faible.

Dans un mode de mise en oeuvre, le message est aussi modifié pour indiquer quelle valeur de seuil S1 a été utilisée par l'équipement intermédiaire qui amplifie le signal, et/ou pour identifier ledit équipement intermédiaire. Ceci est réalisé en ajoutant des mots supplémentaires dans le message avant qu'il soit émis par l'équipement intermédiaire. Par exemple, pour identifier l'équipement intermédiaire, il sera ajouté au message un mot contenant la valeur d'un numéro d'identification de cet équipement intermédiaire.

Dans un autre exemple de mise en oeuvre du procédé selon l'invention qui est illustré par le graphique de la figure 4, il est prévu une autre étape de comparaison de l'information représentative de la qualité du signal reçu (i.e., de la puissance du signal reçu dans l'exemple) à un second seuil S2. Ce dernier est inférieur au seuil S1. En fonction de résultat de la comparaison de cette information au premier et au second seuil respectivement S1 et S2, le signal est ou non amplifié et est ou non émis. Plus précisément, on distingue trois cas différents :
- si cette information est supérieure au seuil S1 (i.e., si P>S1), le signal est émis vers l'équipement destinataire sans être amplifié et sans que le message soit modifié ;
- si cette information est comprise entre le seuil S2 et le seuil S1 (i.e., si S2<P<S1), le signal est amplifié et émis vers l'équipement destinataire après modification du message pour indiquer qu'une telle amplification a lieu ;
- si cette information est inférieure au seuil S2 (i.e., si P<S2), alors le signal n'est pas émis.

Ce dernier cas permet d'éviter qu'un signal trop faible, et donc portant un message fortement corrompu par le bruit sur les moyens de liaison, ne parvienne à l'équipement destinataire. Il peut en effet être préférable, dans certains cas, que l'équipement destinataire ne reçoive rien du tout plutôt qu'un message trop corrompu.

L'invention n'a été décrite ci-dessus qu'en référence à un exemple non limitatif. Elle s'applique à des réseaux de tout type, banalisés ou non, en anneau, en étoile au autre, ainsi qu'à des équipements de toutes natures, et à des moyens de liaison quelconque (fibres optiques, câbles coaxiaux, liaison électromagnétique radiofréquence, hyperfréquence, ou optique, etc ...). De plus le terme "équipement" employé dans ce qui précède doit être considéré dans son acception la plus large. Notamment certains des équipements du réseau peuvent être des équipement fonctionnels, c'est à dire ayant une fonction déterminée dans une application déterminée (par exemple un lampadaire), alors que d'autres équipements ne sont que des relais ou répéteurs, disposés ça et là dans le réseau pour briser une trop grande distance entre deux équipements fonctionnels.

## Revendications

1. Procédé de gestion d'un réseau d'équipements (E1-E6,CU) reliés par des moyens de liaison (LT) et dont certains au moins peuvent être destinateurs et/ou destinataires de messages, selon lequel un message émis par un équipement à destination d'un autre équipement sous la forme d'un signal ayant une puissance nominale (Uₙ) déterminée à l'émission, est modifié pour indiquer, le cas échéant, que ledit signal a été amplifié par un équipement intermédiaire (E1,E6), compris entre l'équipement destinateur (E3) et l'équipement destinataire (CU), et par lequel ce signal transite.

2. Procédé selon la revendication 1, **caractérisé en ce qu'**il comporte les étapes suivantes :
- émission d'un message par l'équipement destinateur (E3) vers l'équipement destinataire (CU), sous la forme d'un signal ayant une puissance nominale (Uₙ) déterminée;
- réception du signal par au moins un équipement intermédiaire (E2,E1,E6) du réseau, compris entre l'équipement destinateur (E3) et l'équipement destinataire (CU);
- mesure d'une donnée (P) représentative de la qualité du signal reçu et comparaison de cette donnée (P) à au moins un premier seuil (S1) ;
- lorsque la donnée (P) mesurée est inférieure audit premier seuil (S1), modification du message pour indiquer qu'une amplification est effectuée, et amplification du signal ;
- émission du signal par l'équipement intermédiaire (E2,E1,E6) vers l'équipement destinataire (CU).

3. Procédé selon la revendication 2, **caractérisé en ce qu'**il comporte en outre une étape de comparaison de la donnée (P) représentative de la qualité du signal à un second seuil (S2), le signal n'étant pas émis par l'équipement intermédiaire si cette information est inférieure audit second seuil (S2).

4. Procédé selon l'une des revendications 2 ou 3, **caractérisé en ce que** la donnée représentative du signal est le niveau de puissance du signal, ou le rapport S/N du niveau de puissance du signal sur le niveau de puissance du bruit, ou un taux d'erreur pour les données transmises.

5. Procédé selon l'une quelconque des revendications 2 à 4 précédentes, **caractérisé en ce que** le message est aussi modifié pour indiquer quelle valeur du premier seuil (S1) a été utilisée par l'équipement intermédiaire (E1,E6) qui amplifie le signal, et/ou pour identifier ledit équipement intermédiaire (E1,E6).

6. Procédé selon l'une des revendications précédents, **caractérisé en ce que** l'étape de modification du message comprend l'incrémentation de la valeur d'un mot (INFO) dudit message.

7. Equipement pour la mise en oeuvre d'un procédé selon l'une des revendications précédentes , **caractérisé en ce qu'**il comporte :
- des moyens pour recevoir un signal émis par un équipement destinateur et ayant une puissance nominale (Uₙ) à l'émission;
- des moyens pour mesurer une donnée (P) représentative de la qualité du signal reçu ;
- des moyens pour comparer cette information à un premier seuil (S1) ;
- des moyens pour modifier un message porté par le signal de manière à indiquer qu'une amplification du signal est effectuée et des moyens pour amplifier le signal, lorsque la donnée mesurée (P) est inférieure à ce premier seuil (S1) ;
- et des moyens pour émettre vers un équipement destinataire le message ainsi modifié sous forme d'un signal amplifié, en sorte que sa puissance est égale à la puissance nominale (Uₙ).

## Claims

1. Method of managing a network of items of equipment (E1-E6, CU) connected by linking means (LT) and some of which at least can be senders and/or addressees of messages, according to which a message transmitted by one item of equipment destined for another item of equipment in the form of a signal having a nominal power (Uₙ) determined on transmission, is modified to indicate, when necessary, that said signal has been amplified by an intermediate item of equipment (E1, E6) lying between the sending item of equipment (E3) and the addressee item of equipment (CU) and through which this signal passes.

2. Method according to claim 1, **characterised in that** it comprises the following steps:
- transmission of a message by the sending item of equipment (E3) to the addressee item of equipment (CU), in the form of a signal having a given nominal power (Uₙ);
- reception of the signal by at least one intermediate item of equipment (E2, E1, E6) of the network, lying between the sending item of equipment (E3) and the addressee item of equipment (CU);
- measurement of an item of data (P) representative of the quality of the signal received and comparison of this item of data (P) with at least one first threshold (S1);
- when the item of data (P) measured is below said first threshold (S1), modification of the message to indicate that amplification is being carried out, and amplification of the signal;
- transmission of the signal by the intermediate item of equipment (E2, E1, E6) to the addressee item of equipment (CU).

3. Method according to claim 2, **characterised in that** it additionally comprises a step in which the item of data P representative of the quality of the signal is compared with a second threshold (S2), the signal not being transmitted by the intermediate item of equipment if this information is below said second threshold (S2).

4. Method according to one of claims 2 or 3, **characterised in that** the item of data representative of the signal is the power level of the signal, or the ratio S/N of the power level of the signal over the power level of the noise, or an error rate for the items of data transmitted.

5. Method according to any one of the preceding claims 2 to 4, **characterised in that** the message is also modified to indicate which value of the first threshold (S1) has been used by the intermediate item of equipment (E1, E6) which amplifies the signal, and/or to identify said intermediate item of equipment (E1, E6).

6. Method according to one of the preceding claims, **characterised in that** the step in which the message is modified comprises incrementation of the value of a word (INFO) of said message.

7. Equipment for implementation of a method according to one of the preceding claims, **characterised in that** it comprises:
- means for receiving a signal transmitted by a sending item of equipment and having a nominal power (Uₙ) on transmission;
- means for measuring an item of data (P) representative of the quality of the signal received;
- means for comparing this information with a first threshold (S1);
- means for modifying a message carried by the signal so as to indicate that amplification of the signal is being carried out, and means for amplifying the signal when the measured item of data (P) is below this first threshold (S1);
- and means for transmitting the message thus modified in the form of an amplified signal to an addressee item of equipment so that its power is equal to the nominal power (Uₙ).

## Patentansprüche

1. Verfahren zur Verwaltung eines Netzwerks aus Einrichtungen (E1-E6, CU), welche über Verbindungsmittel (LT) verbunden sind und von denen einige wenigstens Absender und/oder Empfänger von Nachrichten sein können, bei dem eine Nachricht, welche von einer Einrichtung in Richtung einer anderen Einrichtung in der Form eines Signals, das eine Nennleistung (Uₙ) hat, die beim Aussenden bestimmt wird, gesandt wird, modifiziert wird, um gegebenenfalls anzuzeigen, daß dieses Signal von einer Zwischeneinrichtung (E1, E6) verstärkt wurde, welche zwischen der Absendeeinrichtung (E3) und der Empfängereinrichtung (CU) vorgesehen ist und über welche dieses Signal geht.

2. Verfahren nach Anspruch 1, **dadurch gekennzeichnet, daß** es die folgenden Verfahrensschritte umfaßt:
- Aussenden einer Nachricht über die Absendeeinrichtung (E3) in Richtung der Empfängereinrichtung (CU) in der Form eines Signals, das eine bestimmte Nennleistung (Uₙ) hat;
- Empfang des Signals durch wenigstens eine Zwischeneinrichtung (E2, E1, E6) des Netzes, welche zwischen der Absendeeinrichtung (E3) und der Empfängereinrichtung (CU) vorgesehen ist;
- Messen eines Datums (P), welches repräsentativ für die Qualität des empfangenen Signals ist, und Vergleichen dieses Datums (P) mit wenigstens einem ersten Schwellwert (S1);
- wenn das gemessene Datum (P) niedriger ist als der erste Schwellwert (S1), Modifizieren der Nachricht, um anzuzeigen, daß eine Verstärkung ausgeführt wurde, und Verstärken des Signals;
- Senden des Signals über die Zwischeneinrichtung (E2, E1, E6) in Richtung der Empfängereinrichtung (CU).

3. Verfahren nach Anspruch 2, **dadurch gekennzeichnet, daß** es ferner einen Schritt umfaßt, bei dem das für die Qualität des Signals repräsentative Datum (P) mit einem zweiten Schwellwert (S2) verglichen wird, wobei das Signal durch die Zwischeneinrichtung nicht gesendet wird, wenn diese Information ergibt, daß es niedriger als der zweite Schwellwert (S2) ist.

4. Verfahren nach einem der Ansprüche 2 oder 3, **dadurch gekennzeichnet, daß** das repräsentative Datum des Signals das Leistungsniveau des Signals oder das Signal-Rausch-Verhältnis des Leistungsniveaus dieses Signals in Bezug auf die Rauschleistung oder eine Fehlerquote für die übertragenen Daten ist.

5. Verfahren nach einem der vorangehenden Ansprüche 2 bis 4, **dadurch gekennzeichnet, daß** die Nachricht auch modifiziert wird, um anzuzeigen, welchen Wert der erste Schwellwert (S1) hatte, der von der Zwischeneinrichtung (E1, E6) verwendet wurde, welche das Signal verstärkt, und/oder um die Zwischeneinrichtung (E1, E6) zu identifizieren.

6. Verfahren nach einem der vorangehenden Ansprüche, **dadurch gekennzeichnet, daß** der Schritt der Modifikation der Nachricht das Inkrementieren des Wertes eines Wortes (INFO) dieser Nachricht umfaßt.

7. Einrichtung für die Ausführung eines Verfahrens nach einem der vorangehenden Ansprüche, **gekennzeichnet durch** folgende Merkmale:
- Mittel zum Empfang eines Signals, das von einer Absendeeinrichtung gesendet wurde und eine Leistung (Uₙ) bei der Aussendung hat;
- Mittel zum Messen eines Datums (P), das repräsentativ für die Qualität des empfangenen Signals ist;
- Mittel zum Vergleichen dieser Information mit einem ersten Schwellwert (S1);
- Mittel zum Modifizieren einer Nachricht, welche von dem Signal übertragen wird, um anzuzeigen, daß eine Verstärkung des Signals stattgefunden hat, und Mittel zum Verstärken des Signals, wenn das gemessene Datum (P) unter diesem ersten Schwellwert (S1) liegt;
- und Mittel zum Senden der so modifizierten Nachricht in Form eines verstärkten Signals in Richtung einer Empfängereinrichtung, so daß seine Leistung gleich der Nennleistung (Uₙ) ist.
